# EUROPÄISCHE PATENTANMELDUNG

(11) **EP 1 161 070 A2**
(43) Veröffentlichungstag der Anmeldung: **05.12.2001**
(21) Anmeldenummer: 01113068.9
(22) Anmeldetag: 29.05.2001
(51) Int. Cl.: H04M 11/04

(54) **Adaptionsvorrichtung für Notrufeinrichtungen, insbesondere Autobahnnotrufeinrichtungen**

(30) Priorität: 29.05.2000 DE 20009628 U
(71) Anmelder: SIEMENS AKTIENGESELLSCHAFT, 80333 München (DE)
(72) Erfinder: Behne, Detlev, 25355 Barmstedt (DE)

(57) **Zusammenfassung**

Die vorliegende Erfindung betrifft eine Adaptionsvorrichtung (8) zur Anbindung von in Vierdraht-Technik ausgelegten Notrufeinrichtungen (ANE90), umfassend über eine Notrufschnittstellenanschaltung (4), ein Bussystem (3) und eine Telekommunikationsanlage (2) anschließbare Notrufendgeräte (1), an in Zweidraht-Technik ausgelegte Notrufeinrichtungen (ANE80), wobei die Adaptionsvorrichtung (8) seitens der in Vierdraht-Technik ausgelegten Schnittstelle Notrufeinrichtungen (ANE90) mit der Notrufschnittstellenanschaltung (4) über eine Sendeleitung (7) und eine Empfangsleitung (6) und seitens der in Zweidraht-Technik ausgelegten Notrufeinrichtungen (ANE80) über eine Sende-/Empfangsleitung (15) verbindbar ist und wobei die Adaptionsvorrichtung (8) den komplexen Leitungswiderstand des Leitungssatzes (16) der in Zweidraht-Technik ausgelegten Notrufeinrichtungen (ANE80) nachbildet.

## Beschreibung

Die vorliegende Erfindung betrifft eine Adaptionsvorrichtung zur Anbindung von in Vierdraht-Technik ausgelegten Notrufeinrichtungen, umfassend über eine Notruf-Schnittstellenanschaltung, ein Bussystem und eine Telekommunikationsanlage anschließbare Notrufendgeräte, an in Zweidraht-Technik ausgelegte Notrufeinrichtungen.

Notrufsysteme, insbesondere Autobahnnotrufsysteme, umfassen eine Vielzahl von Notrufeinrichtungen, die über Kommunikationsnetzwerke miteinander verbindbar sind. So sind Notrufendgeräte wie Notrufsäulen, Telefonapparate und dergleichen, über Telekommunikationsanlagen und entsprechende Telekommunikations-Bussysteme und entsprechende Schnittstellenanschaltungen mit entsprechenden Leitzentralen seitens Autobahnmeistereien, Polizei und dergleichen zur Steuerung, Überwachung und/oder Wartung verbindbar.

Problematisch ist die Anpassung von in Vierdraht-Technik ausgelegten Notrufeinrichtungen, wie beispielsweise die Autobahnnotrufeinrichtung 90 (ANE90) der Firma Siemens, an in Zweidraht-Technik ausgelegte Notrufeinrichtungen, wie beispielsweise die heute nutzbare Schnittstelle zur Autobahnnotrufeinrichtung 80 (ANE80) der Firma Siemens. Bei den in Vierdraht-Technik ausgelegten Notrufeinrichtungen stehen voneinander getrennte Sendekanäle und Empfangskanäle zur Verfügung, die jeweils zwei Leitungen zur Übertragung niederfrequenter Signale, insbesondere Sprachsignale, benötigen.

Seitens in Zweidraht-Technik ausgelegter Notrufeinrichtungen werden niederfrequente Sprachsignale über einen Sende-/Empfangskanal, umfassend zwei Leitungen, übertragen.

Bisher wurden zur Anbindung von in Vierdraht-Technik ausgelegten Notrufeinrichtungen an in Zweidraht-Technik ausgelegte Notrufeinrichtungen Adaptionsvorrichtungen der eingangs genannten Art verwendet, welche die erforderliche Drahtumsetzung über passive Übertrager-Gabelschaltungen und gegebenenfalls notwendige Anpassungen und Entzerrungen der niederfrequenten Signale statisch über sogenannte Lötbrücken realisierten.

Diese bekannten Adaptionsvorrichtungen sind nachteiliger Weise nur vor Ort parametrierbar, so dass bei Veränderungen der komplexen Leitungswiderstände der Leitungssätze der in Zweidraht-Technik ausgelegten Notrufeinrichtungen eine Anpassung und Entzerrung der niederfrequenten Signale nur vor Ort durch erneutes Bestimmen des komplexen Leitungswiderstandes und entsprechendes Parametrieren der Übertrager-Gabelschaltungen sowie der Lötbrücken ermöglicht ist. Dies ist sowohl personell als auch zeitlich überaus aufwendig und damit kostenintensiv.

Der vorliegenden Erfindung liegt in Anbetracht dieses Standes der Technik die Aufgabe zugrunde, eine Adaptionsvorrichtung der eingangs genannten Art dahingehend zu verbessern, dass diese auf einfache und kostengünstige Art und Weise parametrierbar ist.

Die Aufgabe ist erfindungsgemäß dadurch gelöst, dass die Adaptionsvorrichtung seitens der in Vierdraht-Technik ausgelegten Notrufeinrichtungen mit der Notrufschnittstellenanschaltung über eine Sendeleitung und eine Empfangsleitung und seitens der in Zweidraht-Technik ausgelegten Notrufeinrichtungen über eine Sende-/Empfangsleitung verbindbar ist, wobei die Adaptionsvorrichtung den komplexen Leitungswiderstand des Leitungssatzes der in Zweidraht-Technik ausgelegten Notrufeinrichtungen nachbildet.

Vorteilhafter Weise weist die Adaptionsvorrichtung zur Nachbildung des komplexen Leitungswiderstandes des Leitungssatzes der in Zweidraht-Technik ausgelegten Notrufeinrichtungen eine von einem Mikrokontroller gesteuerte Gabeleinrichtung auf, welche nach Bestimmung des komplexen Leistungswiderstandes diesen automatisch nachbildet, so dass Änderungen des Leitungssatzes ohne entsprechende Parametrier- und/oder Montagearbeiten vor Ort ausgleichbar sind. Mit einer vorteilhaften Ausgestaltung der Erfindung sind Verstärkung und Entzerrung seitens des Mikrokontrollers einstellbar. Die Adaptionsvorrichtung ermöglicht somit außer einer Schnittstellenkonvertierung Pegelanpassungen sowie während des normalen Betriebs die Einstellung von Verstärkung und Entzerrung.

Gemäß einer weiteren vorteilhaften Ausgestaltung der Erfindung ist der Mikrokontroller seitens eines übergeordneten Rechners steuerbar. Auf diese Art und Weise ist es möglich, die erfindungsgemäße Adaptionsvorrichtung seitens einer Leitzentrale zu parametrieren bzw. fernzusteuern. Die erfindungsgemäße Adaptionsvorrichtung ist damit fernsteuerbar und fernparametrierbar. Gemäß einer besonders vorteilhaften Ausgestaltung der Erfindung ist der Mikrokontroller ein Modul auf der Basis eines C517. Auf diesem Modul ist eine Firmware implementiert, welche einen firmenware-download während der normalen Arbeitsphase ermöglicht, ohne dabei den normalen Betrieb der erfindungsgemäßen Adaptionsvorrichtung zu beeinflussen.

Mit einer weiteren besonders vorteilhaften Ausgestaltung der Erfindung ist die Adaptionsvorrichtung über eine twisted pair-Verbindung mittels TCP/IP fernsteuerbar und/oder fernparametrierbar.

Weitere Einzelheiten, Merkmale und Vorteile der Erfindung werden nachfolgend anhand der in den Figuren dargestellten Ausführungsbeispiele näher erläutert. Dabei zeigen:
- FIG 1: einen Pegelplan für eine Vierdraht- / Zweidraht-Anbindung und
- FIG 2: ein Blockschaltbild einer Ausführungsform einer Adaptionsvorrichtung.

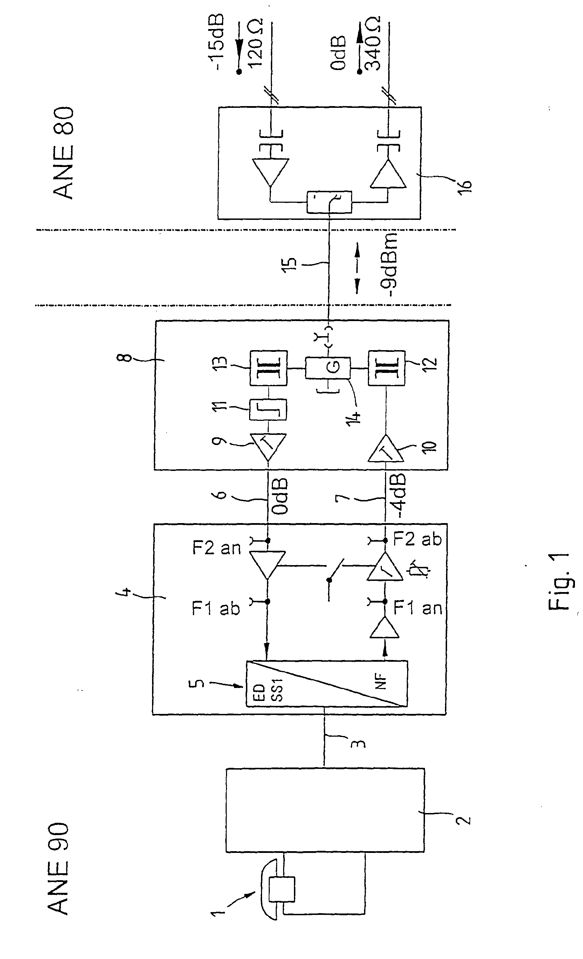

FIG 1 zeigt einen Pegelplan für eine Anbindung einer in Vierdraht-Technik ausgelegten Autobahnnotrufeinrichtung, vorliegend eine ANE90 der Firma Siemens, an eine in Zweidraht-Technik ausgelegte Autobahnnotrufeinrichtung, vorliegend eine ANE80 der Firma Siemens.

An die Adaptionsvorrichtung 8 sind seitens der ANE90 Notrufendgeräte 1, vorliegend die Hör- und/oder Sprecheinrichtungen einer Notrufsäule, über eine Telekommunikationsanlage 2, ein Bussystem 3, eine Notrufschnittstellenanschaltung 4 und über eine Sendeleitung 7 sowie eine Empfangsleitung 6 angeschlossen. Über eine Sende-/Empfangsleitung 15 eines Kommunikationsnetzwerks ist die Adaptionsvorrichtung 8 seitens der in Zweidraht-Technik ausgelegten Schnittstelle zur Autobahnnotrufeinrichtung, vorliegend eine ANE80 der Firma Siemens, verbindbar.

Das Notrufendgerät 1 ist vorliegend mit der ein sogenanntes S0-Gateway bereitstellenden Telekommunikationsanlage 2 und dem als S0-Bus ausgebildeten Bussystem 3 mit der Notrufschnittstellenanschaltung 4 verbunden. Wie in der Figur dargestellt umfasst die Notrufschnittstellenanschaltung einen analog-digital/digital-analog-Wandler 5, welcher vorliegend von einem CODEC-Baustein bereitgestellt wird. Der AD/DA-Wandler 5 verwendet dabei als Software-Protokoll ED SS1. Die über den S0-Bus 3 über die Telekommunikationsanlage 2(S0-gateway) von dem Notrufendgerät 1 gesendeten digitalen niederfrequenten Sprachsignale werden seitens des analog-digital/digital-analog-Wandlers 5 analog gewandelt und über die Sendeleitung 7 durch Verstärker- und Filtermittel seitens der Notrufschnittstellenanschaltung 4 der Adaptionsvorrichtung 8 zugeführt. Entsprechend umgekehrt werden seitens der Adaptionsvorrichtung 8 über die Leitung 6 der Notrufschnittstellenanschaltung 4 analoge Signale dem Wandler 5 zugeführt, analog-digital-gewandelt und in digitaler Form über den S0-Bus 3 und die Telekommunikationsanlage 2 dem Notrufendgerät 1 zugeführt. Die Pegelangaben seitens der Sendeleitung 7 (-4dB) und der Empfangsleitung 6 (0dB) beziehen sich auf die analoge Masse seitens der Notrufschnittstellenanschaltung 4 und der Adaptionsvorrichtung 8. Die Sendeleitung 7 und die Empfangsleitung 6 bilden somit jeweils mit der analogen Masse ein Vierdraht-System.

Seitens der Adaptionsvorrichtung 8 sind für den durch die Sendeleitung 7 und die analoge Masse gebildeten Sendekanal ein getrimmter Operationsverstärker 10 und ein Transformator 12, seitens des durch die Empfangsleitung 6 und die analoge Masse gebildeten Empfangskanals ein getrimmter Operationsverstärker 9, ein Begrenzer 11 und ein Transformator 13 vorgesehen, welche über die Gabeleinrichtung 14 und die Sende-/Empfangsleitung 15 mit der Autobahnnotrufeinrichtung 80 (ANE80) verbindbar sind. Seitens der Gabeleinrichtung 14 wird der von der ANE90 ausgesehene komplexe Leitungswiderstand der ANE80 automatisch nachgebildet. Dazu wird die Gabelschaltung über einen in der Figur nicht explizit dargestellten Mikrokontroller angesteuert, welcher seinerseits seitens eines übergeordneten Rechners eines Leitsystems steuerbar ist. Über die Ansteuerung der Gabeleinrichtung 14 seitens des Mikrokontrollers lässt sich die ANE90 an den komplexen Leitungswiderstand der ANE80 für die über die Leitung 15 auszutauschenden Niederfrequenzen Sprachsignale anpassen und deren Entzerrung über die Trennung hinsichtlich Sende- bzw. Empfangskanal steuern.

Die Adaptionsvorrichtung 8 ist somit über den Mikrokontroller fernparametrierbar und fernsteuerbar.

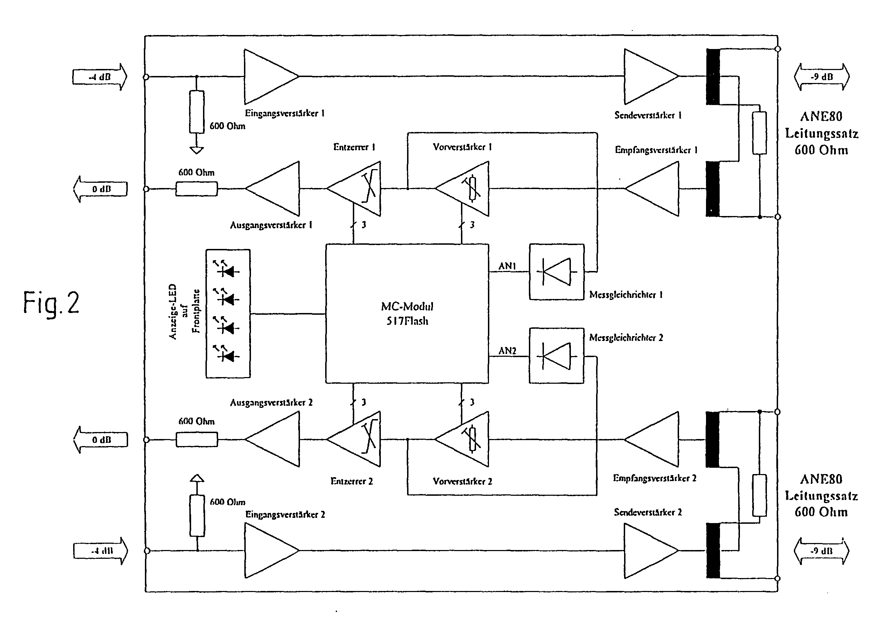

FIG 2 zeigt ein Blockschaltbild der Adaptionsvorrichtung 8. Diese ist als Steckbaugruppe im Europaformat aufgebaut und weist zwei potentialgetrennte, gleichstromfreie Zweidraht-Schnittstellen zu den Leitungssätzen der Autobahnnotrufeinrichtung 80 ANE80 auf, die über Trennstecker führt und gegen Überspannungen geschützt sind.

Die Ein- und Ausgangswiderstände zu der Notrufschnittstellenanschaltung 4 betragen einheitlich 600 Ω. Dabei werden die Nennpegel gemäß dem Pegelplan nach Figur 1 für eine ANE80-Anbindung wie folgt definiert:
- Ausgang Leitung 6 zu Notrufschnittstellenanschaltung 4:0dB an R_{Last} = 600 Ω
- Eingang Notrufschnittstelleneinschaltung 4 über Leitung 7 an Adaptionsvorrichtung 8: -4dB an Rᵢₙ= 600 Ω
- Zweidrahtleitung 15 zum Leitungssatz der ANE80:-9dB, Impedanz etwa 600 Ω

Zur sicheren Funktion des Übergangs von Zweidrahttechnik auf Vierdrahttechnik ausgebildet aus drei Leitungen, der Sendeleitung 7 und der Empfangsleitung 6 sowie der jeweils verwendeten analogen Masse, ist eine konstante Impedanz des Leitungssatzes der ANE80 Voraussetzung. Die Impedanz des Leitungssatzes kann dabei in einem Bereich von 500 Ω bis 700 Ω liegen

Die Einstellung der Charakteristika von Verstärkung und Entzerrung beim Übergang von Zweidrahttechnik auf Vierdrahttechnik, d.h. von der ANE80 auf die Adaptionsvorrichtung 8 auf die Notrufschnittstellenanschaltung 4, erfolgt mittels des Mikrokontrollermoduls 517FLASH in jeweils 8 geschalteten Stufen, wie in FIG 2 dargestellt.

Zur Gewährleistung des softwaregesteuerten Umschaltens zur Pegelanpassung ist der Empfangspegel der Adaptionsvorrichtung 8 auf der Zweidrahtleitung mittels Messgleichrichter und analog/digital-Umsetzer des Mikrokontrollermoduls auswertbar.

Beim Übergang von Vierdrahttechnik, vorliegend gebildet aus drei Leitungen unter Verwendung einer analogen Masse, auf Zweidrahttechnik ist die Verstärkung seitens der Adaptionsvorrichtung 8 mittels Potentiometer in einem Bereich von etwa 20 dB einstellbar, wie in FIG 2 dargestellt (Vergleiche Vorverstärker 1 und 2). Durch den Einstellbereich der Potentiometer können mit Vorgabe des Pegelplans gemäß FIG 1 abweichende Sendepegel der Notrufschnittstellenanschaltung 4 ausgeglichen werden. Dabei wird eine saubere Trennung der analogen Masse und der digitalen Masse sichergestellt.

Die verschiedenen Betriebsspannungen der Adaptionsvorrichtung 8 werden vom Mikrokontroller-Modul 517FLASH überaus einfach auf Ausfall überwacht, indem in einem solchen Fall keine direkte Spannung gemessen wird. Die Adaptionsvorrichtung 8 weist vier Leuchtdioden auf, welche über das Mikrokontroller-modul 517FLASH softwaregesteuert geschaltet werden, wie in FIG 2 dargestellt.

Die Einbindung des Mikrokontroller-Moduls 517FLASH in übergeordnete Software erfolgt mittels serieller Schnittstellen, die in FIG 2 nicht explizit dargestellt sind, über ein Bussystem. Über das Bussystem erfolgt darüber hinaus eine Programmierung von Steckplatzadressen und Rahmenbits der Adaptionsvorrichtung 8 bzw. des Mikrokontrollermoduls 517FLASH.

## Patentansprüche

1. Adaptionsvorrichtung (8) zur Anbindung von in Vierdraht-Technik ausgelegten Notrufeinrichtungen (ANE90), umfassend über eine Notrufschnittstellenanschaltung (4) ein Bussystem (3) und eine Telekommunikationsanlage (2) anschließbare Notrufendgeräte (1), an in Zweidraht-Technik ausgelegte Notrufeinrichtungen (ANE80) wobei die Adaptionsvorrichtung (8) seitens der in Vierdraht-Technik ausgelegten Notrufeinrichtungen (ANE90) mit der Notrufschnittstellenanschaltung (4) über eine Sendeleitung (7) und eine Empfangsleitung (6) und seitens der in Zweidraht-Technik ausgelegten Schnittstelle zur Notrufeinrichtungen (ANE80) über eine Sende-/Empfangsleitung (15) verbindbar ist und wobei die Adaptionsvorrichtung (8) den komplexen Leitungswiderstand des Leitungssatzes (16) der in Zweidraht-Technik ausgelegten Notrufeinrichtungen (ANE80) zur Anpassung und/oder Entzerrung niederfrequenter Signale nachbildet.

2. Adaptionsvorrichtung (8) nach Anspruch 1, **dadurch gekennzeichnet, dass** diese zur Nachbildung des komplexen Leitungswiderstandes des Leitungssatzes (16) der in Zweidraht-Technik ausgelegten Schnittstelle zur Notrufeinrichtungen (ANE80) eine von einem Mikrokontroller gesteuerte Gabeleinrichtung (14) aufweist.

3. Adaptionsvorrichtung (8) nach Anspruch 1 oder Anspruch 2, **dadurch gekennzeichnet, dass** der Mikrokontroller seitens eines übergeordneten Rechners steuerbar ist.

4. Adaptionsvorrichtung (8) nach einem der Ansprüche 1 bis 3, **dadurch gekennzeichnet, dass** der Mikrokontroller ein Modul auf der Basis eines C517 ist.

5. Adaptionsvorrichtung (8) nach einem der Ansprüche 1 bis 4, **dadurch gekennzeichnet, dass** diese fernsteuerbar ist.

6. Adaptionsvorrichtung (8) nach einem der Ansprüche 1 bis 5, **dadurch gekennzeichnet, dass** diese fernparametrierbar ist.

7. Adaptionsvorrichtung (8) nach einem der Ansprüche 1 bis 6, **dadurch gekennzeichnet, dass** diese über Twisted-Pair mittels TCP/IP fernsteuerbar ist.

8. Adaptionsvorrichtung (8) nach einem der Ansprüche 1 bis 7, **dadurch gekennzeichnet, dass** diese über Twisted-Pair mittels TCP/IP fernparametrierbar ist.

9. Adaptionsvorrichtung (8) nach einem der Ansprüche 2 bis 8, **dadurch gekennzeichnet, dass** durch den Mikrokontroller während des normalen Betriebes Verstärkung und/oder Entzerrung einstellbar sind.
